# EUROPEAN PATENT SPECIFICATION

(11) **EP 1 959 109 B1**
(45) Date of publication and mention of the grant of the patent: **27.06.2012**
(21) Application number: 06833903.5
(22) Date of filing: 28.11.2006
(51) Int. Cl.: F01N 3/08, B01D 53/86, B01D 53/94, F01N 3/10, F01N 3/28, F01N 3/20

(54) **DEVICE FOR CLEANING EXHAUST GAS OF INTERNAL COMBUSTION ENGINE**
ABGASREINIGER FÜR VERBRENNUNGSMOTOR
PURIFICATEUR DE GAZ D'ECHAPPEMENT POUR MOTEUR A COMBUSTION INTERNE

(30) Priority: 01.12.2005 JP 2005348292
(43) Date of publication of application: 20.08.2008
(73) Proprietor: TOYOTA JIDOSHA KABUSHIKI KAISHA, Toyota-shi, Aichi 471-8571 (JP)
(72) Inventor: HIRATA, Hirohito, Aichi 471-8571 (JP); KAKINOHANA, Masaru, Aichi 471-8571 (JP); IBE, Masaya, Aichi 471-8571 (JP)
(74) Representative: Jackson, Martin Peter
(86) International application number: PCT/JP2006/324133
(87) International publication number: WO 2007/064004

(56) References cited:
- EP-A2- 0 846 491
- EP-A2- 1 365 119
- WO-A1-99/36162
- WO-A1-2004/015252
- WO-A1-2004/024301
- WO-A1-2005/005027
- JP-A- 2003 516 491
- JP-A- 2005 535 438
- US-A1- 2003 226 352

## Description

### TECHNICAL FIELD

The present invention relates to a device for cleaning exhaust gas of an internal combustion engine, particularly to a device for cleaning exhaust gas of the internal combustion engine provided with means for cleaning exhaust gas such as a catalyst.

### BACKGROUND ART

Recently, a NOx catalyst was put into practice for cleaning nitrogen oxide (NOx) contained in exhaust gas of an internal combustion engine of a lean combustion type. In the NOx catalyst, for example, of a storage reduction type, alkaline earth such as barium (Ba) and precious metal such as platinum (Pt) are carried on a carrier such as alumina, and NOx in the exhaust gas is absorbed and stored in the NOx catalyst in a form of nitrate (Ba(NO₃)₂). The NOx catalyst has a function for absorbing and storing NOx contained in the exhaust gas if the internal combustion engine is driven at a lean air-fuel ratio, while if driven at a air-fuel ratio of lower than a theoretical air-fuel ratio, the NOx catalyst releases the stored NOx and reduces the same.

Since sulfur (S) is contained in fuel and lubricant for the engine, it is also contained in the exhaust gas. Thus, the NOx catalyst absorbs sulfuric components in the exhaust gas, such as sulfate, for example, BaSO₄ and poisoned thereby. Since sulfate absorbed and stored in the NOx catalyst has the stability higher than that of nitrate, it is not released from the NOx catalyst but gradually stored in the NOx catalyst even if the air-fuel ratio in the exhaust gas is fuel rich. If an amount of sulfate in the NOx catalyst increases , an amount of NOx capable of being absorbed by the NOx catalyst gradually decreases , resulting in a problem in that an amount of sulfate in the NOx catalyst increases to lower the NOx absorbing ability of the NOx catalyst.

To solve such a problem in that the NOx catalyst is poisoned by sulfur, Japanese Patent Laid-Open No. 2000-145436 discloses a device for absorbing SOx in the exhaust gas by a SOx absorbent disposed upstream from the NOx absorbent. According to this device, SOx in the exhaust gas is absorbed by the SOx absorbent before SOx in the exhaust gas reaches the NOx absorbent, whereby the poisoning of the NOx absorbent due to sulfur is prevented.

However, the device disclosed in Japanese Patent Laid-Open No. 2000-145436 has insufficient for absorbing SOx when the SOx absorbent is at a low temperature, whereby there is a problem in that SOx passes through the SOx absorbent when the temperature is low and is absorbed by the NOx absorbent. Also, there is another problem in that the drop of the ability for absorbing SOx in the SOx absorbent is relatively significantly lowered as time passes, whereby it is difficult to maintain a sufficient SOx absorbing ability for a long period.

EP-A2-0, 846, 491 discloses a device in accordance with the pre-characterising section of claim 1.

### DISCLOSURE OF THE INVENTION

The present invention has been made to solve the above-mentioned problems, and an object thereof is to provide a device for cleaning exhaust gas of an internal combustion engine capable of exhibiting the sufficient SOx absorbing ability even at a low temperature and of restricting the deterioration of the SOx absorbing ability.

To achieve the above-mentioned object, according to one aspect of the present invention, a device for cleaning exhaust gas of an internal combustion engine is provided, comprising means for cleaning exhaust gas discharged from a combustion chamber, provided in an exhaust gas passage of the internal combustion engine, a SOx trap catalyst provided in said exhaust gas passage at a position upstream from said exhaust gas cleaning means, for absorbing SOx in the exhaust gas, and means for feeding ozone to said exhaust gas passage at a position upstream from said SOx trap catalyst, wherein said exhaust gas cleaning means cleans at least one of HC, CO and NOx components in the exhaust gas at a cleaning rate higher than that of said SOx trap catalyst, characterized in that said exhaust gas cleaning device comprises a NOx catalyst of a storage reduction type, and said NOx catalyst of a storage reduction type carries more precious metal than in said SOx trap catalyst.

According to one aspect of the present invention, it is possible to absorb SOx contained in the exhaust gas by the SOx trap catalyst and prevent the exhaust gas cleaning means from being poisoned by sulfur. Particularly, by ozone fed as strong oxidizing gas at a position upstream from the SOx trap catalyst, it is possible to oxidize SOx in the exhaust gas to be easily absorbable. Accordingly, the absorption of SOx by the SOx trap catalyst is possible even at a low temperature.

In this regard, the cleaning of exhaust gas includes the absorption, adsorption or storage of special components in the exhaust gas.

Here, the SOx trap catalyst preferably contains alkali metal elements, alkaline earth metal elements or rare earth elements.

While an amount of precious metal carried on the SOx trap catalyst from the upstream end to the downstream end is maintained at a constant value, a total amount carried on the storage reduction type NOx catalyst can be more than that carried on the SOx trap catalyst. Or, the amount of precious metal may be gradually increased from the upstream end of the SOx trap catalyst to the downstream end of the storage reduction type NOx catalyst.

Preferably, the SOx trap catalyst has no active points consisting of precious metal.

In this case, the problem of the poisoning due to sulfur in that as SOx has been stored in the SOx trap catalyst, the active points are covered with sulfate is solved, and the deterioration of the SOx absorbing ability as the time has passed is avoidable

According to the present invention, when SOx in the exhaust gas is absorbed upstream from the exhaust gas cleaning means such as the catalysts, an excellent effect is significant In that the SOx absorbing ability is not lowered but sufficiently exhibited even at a low temperature.

### BRIEF DESCRIPTION OF THE DRAWINGS

Fig. 1 diagrammatically illustrates a system of a device for cleaning exhaust gas of an internal combustion engine according to one embodiment of the present invention;
Fig. 2 illustrates cells of a SOx trap catalyst in an enlarged manner;
Fig. 3 illustrates carriers in an enlarged manner;
Fig. 4 illustrates a whole structure of test equipment for carrying out tests in relation to the embodiment;
Fig. 5 illustrates an area V of Fig. 4 in more detail: and
Fig. 6 is a graph illustrating the comparison of ratios of sulfur trapped by the SOx trap catalysts used in the respective examples.

### BEST MODE FOR CARRYING OUT THE INVENTION

Embodiments of the present invention will be described below with reference to the attached drawings.

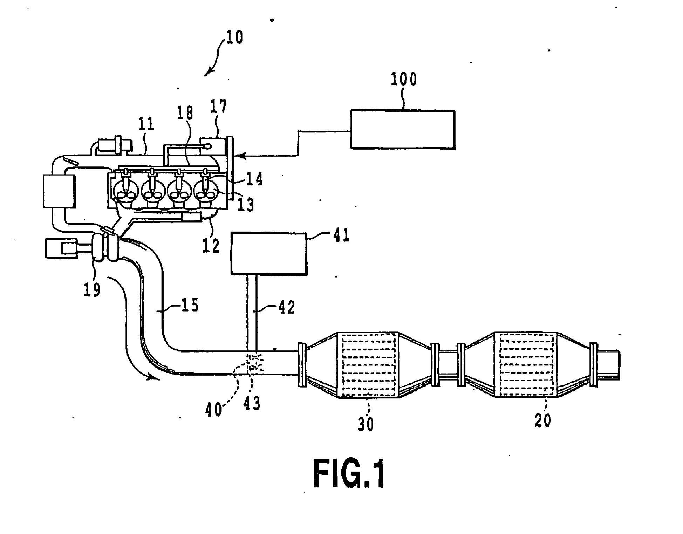

Fig. 1 diagrammatically illustrates a system of a device for cleaning exhaust gas of an internal combustion engine according to one embodiment of the present invention . In this drawing, reference numeral 10 denotes an internal combustion engine; a spark ignition type internal combustion engine in this embodiment, more concretely a direct injection type gasoline engine. The engine, however, may be of a compressive ignition type, i.e., a diesel engine. The present invention may be applicable to any types or kinds of engines provided the exhaust gas thereof contains sulfuric components. Reference numeral 11 denotes an intake manifold communicated with an intake port, 12 denotes an exhaust manifold communicated with an exhaust port, and 13 denotes a combustion chamber. In this embodiment, fuel fed from a fuel tank not shown to a high pressure pump 17 is compressively delivered to delivery pipe 18 by a high pressure pump 17 and stored there in a highly compressed state. This high pressure fuel in the delivery pipe 18 is directly injected from a fuel injection valve 14 into the combustion chamber 13. Exhaust gas from the engine 10 flows, after passing through a turbocharger 19 via the exhaust gas manifold 12, into the exhaust gas passage 15 downstream therefrom, and is discharged to an outer air after being cleaned as stated later.

In the exhaust gas passage 15, a NOx catalyst 20 for cleaning NOx in the exhaust gas is provided as means for cleaning exhaust gas discharged from the combustion chamber 13. In this connection, the exhaust gas cleaning means to which is applicable the present invention is not limited to only the NOx catalyst 20 but may additionally be any other means that may be poisoned with sulfuric components contained in the exhaust gas to lose the exhaust gas cleaning ability inherent thereto. Such exhaust gas cleaning means includes a three way catalyst, an HC absorbing agent, a NOx absorbing agent, a particulate matter oxidation catalyst or others. Also, the exhaust gas cleaning means may include the combinations of more than two of them.

The NOx catalyst 20 according to this embodiment is a storage reduction type NOx catalyst (NSR). In this case, the NOx catalyst 20 is structured by carrying precious metal, for example, platinum Pt as active points and NOx absorbing components on a surface of a substrate consisting of oxide such as alumina Al₂O₃. The NOx absorbing agent consists of at least one selected from a group of alkali metal such as potassium K, sodium Na, lithium Li or cesium Cs, alkaline earth such as barium Ba or calcium Ca and rare earth such as lanthanum La or yttrium Y. The storage reduction type NOx catalyst 20 absorbs NOx if an air fuel ratio of the exhaust gas flowing thereinto is leaner than a predetermined value (typically a theoretical air fuel ratio), and contrarily, releases the absorbed NOx if the concentration of oxygen in the exhaust gas becomes lower. According to this embodiment, since a direct injection type gasoline engine capable of executing a lean burn drive is used, the air fuel ratio of the exhaust gas becomes lean during the lean burn drive, and the NOx catalyst 20 absorbs NOx in the exhaust gas. Also, if the air fuel ratio becomes rich by feeding the reducing agent upstream from the NOx catalyst 20, the NOx catalyst 20 releases the absorbed NOx. This released NOx reacts with the reducing agent and, is reduced and cleaned.

The reducing agent may be those generating reduction components such as hydrocarbon HC or carbon monoxide CO in the exhaust gas, and the followings are usable, including gas such as hydrogen or carbon monoxide, liquid or gaseous hydrocarbon such as propane, propylene or butane and liquid fuel such as gasoline, gas oil or kerosene. In this embodiment, gasoline used as fuel is employed as the reducing agent for the purpose of avoiding the complexity during the storage and/or supplementation. To supply the reducing agent, fuel may be injected from an injection valve (not shown) separately provided in the exhaust gas passage 15 upstream from the NOx catalyst 20, or a larger amount of fuel than usual may be injected from the fuel injection valve 14, or fuel is post-injected from the fuel injection nozzle 14 at a final stage of the expansion cycle or in the exhaust cycle. Such the supply of the reducing agent for the purpose of releasing and reducing NOx in the NOx catalyst 20 is called as a rich spike.

The NOx catalyst 20 may be of a selective catalytic reduction type (SCR). Examples of the selective reduction catalytic type NOx catalyst may be that carrying precious metal such as platinum on the surface of substrate made, for example, of zeolite or alumina, that carrying transition metal such as Cu on the substrate surface by the ion exchange, or that carrying titania/vanadium catalyst (V₂O₃/WO₃/TiO₂) on the substrate surface. In the selective catalytic reduction type NOx catalyst, HC and NO in the exhaust gas are constantly and simultaneously are reacted to be N₂, O₂ or H₂O and cleaned under the condition wherein the air fuel ratio in the flowing-in exhaust gas is lean. In this regard, the existence of HC, is indispensable when NOx is cleaned. Since unburned HC is surely contained in the exhaust gas even if the air fuel ratio is lean, it is possible to reduce and clean NOx by using the same, As described above, the reducing agent may be fed by carrying out the rich spike as in the case of the storage reduction type NOx catalyst. In this case, ammonia or urea may be used as the reducing agent other than described above.

Now, the description will be made on other means for cleaning exhaust gas. The three way catalyst carries precious metal such as Pt, Pd or Rh on porous oxide such as alumina or ceria, and is capable of simultaneously cleaning HC, CO and NOx in the exhaust gas in an atmosphere in the vicinity of the stoichiometric air fuel ratio. The HC absorbing agent is made, for example, of porous absorbing agent mainly composed of silica (such as that carries SiO₂ between layered crystals of SiO₄) or porous material, such as zeolite, formed to be in a cylindrical shape having a number of thin axial flow passages (cells), capable of absorbing a HC component in the incoming exhaust gas within porous thin holes when the absorbing agent temperature is low and releasing the absorbed HC component therefrom when the absorbing agent temperature is high. This is particularly effective for decreasing so-called cold HC during the cold start of the engine. The NOx absorbing agent is formed of porous zeolite or others and maintains NO or NO₂ in the exhaust gas as it is without converting to nitrate. The particulate matter oxidation catalyst is carried on a surface of a particulate filter for trapping particulate matter (PM) mainly discharged from a diesel engine and oxidizing (burning) the trapped particulate matter at a relatively low temperature. This catalyst is at least one selected from a group consisting of precious metal such as platinum Pt, palladium Pd or Rhodium Rh, alkali metal such as potassium K, sodium Na, lithium Li or cesium Cs, alkaline rare earth such as barium Ba, calcium Ca or strontium Sr, rare earth such as lanthanum La, yttrium Y or cerium Ce and transition metal such as iron Fe.

Now referring again to Fig. 1, according to this embodiment, a SOx trap catalyst 30 for absorbing SOx in the exhaust gas is provided in the exhaust gas passage 15 at a position upstream from the NOx catalyst 20. According thereto, it is possible to absorb (or adsorb or trap) SOx contained in the exhaust gas by the SOx trap catalyst 30 before SOx reaches the NOx catalyst 20, whereby it is possible to prevent the NOx catalyst from being poisoned with sulfur. Also, there may be a possibility of eliminating the regeneration control for recovering the NOx catalyst from the sulfuric poisoning as being generally carried out. This regeneration control is carried out by temporarily setting the air fuel ratio to be stoichiometric or rich when the exhaust gas temperature is relatively high (for example, 400°C). Thus, sulfate is decomposed to sulfur oxide (SOx) and removed from the NOx catalyst.

Complementarily, while the exhaust gas temperature at which sulfate is removable from the NOx catalyst 20, for example, 400°C, is relatively easily reached by the gasoline engine as in this embodiment, it is relatively difficult to be reached by the diesel engine wherein the temperature of exhaust gas is inherently low. Contrary thereto, the temperature at which the stored NOx is releasable from the NOx catalyst and reducible is lower than the temperature at which sulfate is removable, for example, 200 to 300°C. Sulfate is more stable than nitrate and, therefore impossible to be removed unless the atmospheric temperature is higher than in a case of nitrate. The exhaust gas temperature at which sulfate is removable is various in accordance with materials or structures of exhaust gas cleaning means; for example, there may be a case of 500°C or higher.

As illustrated in Fig. 1, ozone feeding means capable of feeding ozone (O₃) is provided in the exhaust gas passage 15 at a position upstream from the SOx trap catalyst 30. The ozone feeding means includes n ozone feeding member 40 inserting into the exhaust gas 15 at a position upstream from the SOx trap catalyst 30, and an ozone generator 41 connected via an ozone feeding passage 42 to the ozone feeding member 40. Ozone generated in the ozone generator 41 reaches the ozone feeding member 40 via the ozone feeding passage 42, and is injected into the exhaust gas passage 15 in the downstream direction from feeding ports 43 provided in the ozone feeding member 40. According to this embodiment, while a plurality (two) of the feeding ports 43 are provided, it may be only one. The ozone feeding member 40 extends in the diametrical direction of the exhaust gas passage 15, and the feeding ports 43 thereof are arranged at a predetermined interval in the longitudinal direction of the ozone feeding member 40 so that ozone is dispersed evenly in the exhaust gas passage 15. Positions of the feeding ports 43 becomes ozone feeding positions in the exhaust gas passage 15.

The ozone generator 41 may be of a type wherein ozone is generated while air or oxygen is flowing as raw material through a discharge tube capable of applying a high voltage, or of any other types. Air or oxygen used as the raw material is a gas taken from outside of the exhaust gas passage 15, and not a gas contained within the exhaust gas in the exhaust gas passage 15. In the ozone generator 14, the efficiency for producing ozone is higher when using a raw material having a higher temperature than when using that having a lower temperature. Accordingly, by generating ozone while using gas fed from outside of the exhaust gas passage 15 as described above, it is possible to improve the efficiency for producing ozone.

The ozone generator 41 is connected to an electronic control unit (hereinafter referred to as ECU) 100 as control means, and when it is switched ON by ECU 100, it generates ozone, and when it is switched OFF by ECU 100, it stops the generation of ozone. Ozone thus generated is fed from the feeding ports 43 of the ozone feeding member 40 into the exhaust gas passage 15 as described above, whereby the feeding of ozone is carried out. In this embodiment, while ozone produced by switching the ozone generator 41 to ON is immediately fed, ozone may be preliminarily produced and stored, and may be fed by switching a valve. Also, ozone may be compressed by a pump or a compressor before it is fed.

ECU 100 executes the rich spike control for releasing NOx from the NOx catalyst 20 in accordance with a predetermined program preliminarily stored therein. That is, when the conditions for executing the predetermined rich spike are satisfied, ECU 100 simultaneously executes the rich spike by injecting fuel a separately provided injection valve for the rich spike or injecting a more amount of fuel than usual from the fuel injection valve 14, or executing the post injection from the fuel injection valve 14. Thereby, the air fuel ratio of the exhaust gas flowing into the NOx catalyst 20 becomes richer than the theoretical air fuel ratio, and NOx stored in the NOx catalyst 20 is released and reacted with unburned components (CO, HC) in the exhaust gas to be reduced and cleaned. In such a manner, the rich spike control means is constituted by ECU 100.

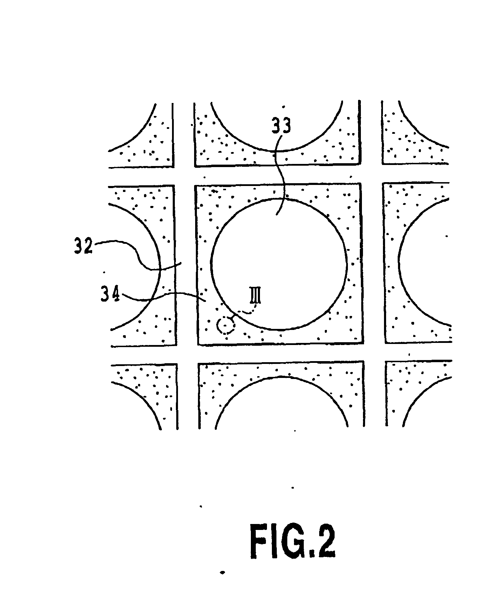

Fig. 2 illustrates an enlarged view of cells in the SOx trap catalyst 30. The SOx trap catalyst 30 includes a substrate 32 made, for example, of cordielite in a cylindrical shape as a whole, and the substrate 32 is formed to define a number of mesh-like or honeycomb-like cells 33 used as exhaust gas holes. The cell 33 extends in the axial direction (the front to backward direction of Fig. 2) of the SOx trap catalyst 30, and is opened at opposite ends thereof to define an inlet and an exit for the exhaust gas, respectively. On the inner wall of the cell 33, a carrier 34 is formed all over the surface thereof as a wash coat layer. The carrier 34 is formed, for example, of alumina (Al₂O₃) having a thickness of 20 to 50µm.

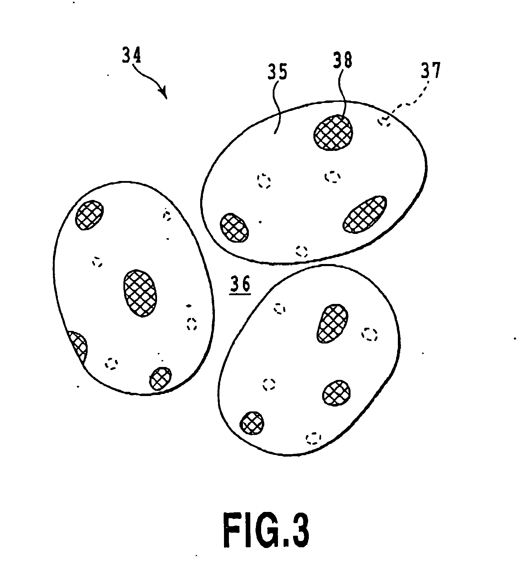

Fig. 3 illustrates an enlarged view of the carrier 34. The carrier 34 is formed of a number of particles 35 microscopically agglomerated together so that voids 36 are formed between the particles 35 for allowing gas to diffuse therein. A diameter of the particle 35 is, for example, approximately several ten nm. The carrier 34 is formed by mixing and dispersing powder of material forming the carrier 34 with solution such as water, in which solution, the substrate 32 is immersed and after being dried, sintered to be a final product. On the surface of the particle 35 forming the carrier 34, a number of components reacted with SOx to produce sulfate; i.e., SOx reactive components are provided.

In a case of such a prior art SOx trap catalyst as disclosed in Japanese Patent Laid-Open No. 2000-145436, a number of active points 37 consisting of precious metal such as Pt or Pd are provided on the surface of the particle 35 , and the active points 37 are necessary. Contrary to this, according to this embodiment, there are no such active points 37 on the surface of the particle 35, and thus the carrier 34 does not contain the active points 37. In the device for cleaning the exhaust gas according to the present invention, although the SOx trap catalyst 30 may contain the active points 37, they are not indispensable but rather preferably eliminated.

The SOx reactive components 38 are preferably alkali metal element, alkaline earth metal element or rare earth element . The alkali metal element is preferably Li, Na or K, the alkaline earth element is preferably Ba, Ca or Sr, the rare earth element is preferably Ba, Ca or Sr, and the rare earth element is preferably La.

Now, the exhaust gas discharged from the combustion chamber 13 of the engine 10 is supplied with ozone from the ozone feeding member 40, and thereafter, sequentially passes the SOx trap catalyst 30 and the NOx catalyst 20. SOx in the exhaust gas is oxidized with ozone as a strong oxidizing gas to be SO₃ which is easily absorbable. SO₃ reacts with the SOx reactive components 38 in the SOx trap catalyst 30 without the assistance of the active points 37 to generate sulfate. Tis sulfate is absorbed by the carrier 34 , and as a result, SOx in the exhaust gas is absorbed by the SOx trap catalyst 30. Since the exhaust gas enters the voids 36 between the particles 35, The generation and absorption of sulfate are carried out in a wide area on the surface of the particle.

Particularly, the absorption of SOx is possible even if the temperature of the exhaust gas or the SOx trap catalyst 30 is low. This is because SOx is oxidized by ozone even at the low temperature to be an easily absorbable state. Contrary to this, according to the conventional SOx trap catalyst, since the easily absorbable state is not obtainable without using the active points 37, it is necessary to rise the catalyst temperature to the active temperature or higher. Accordingly, as a result, SOx is not absorbable at the low temperature and SOx freely passes the SOx trap catalyst to adhere to the NOx catalyst or others, resulting in the sulfuric poisoning. According to the inventive device for cleaning exhaust gas, such a problem is eliminated, and it is possible to prevent the NOx catalyst from being poisoned by sulfur directly after the engine start or during the low temperature drive.

Also, in this embodiment, there is an advantage in that the SOx absorbing ability of the SOx trap catalyst 30 has been sufficiently maintained for the long period without being degraded. That is, if the absorption of SOx in the SOx trap catalyst continues, sulfate is stored on the carrier 35. In the conventional SOx catalyst, the active points 37 are gradually covered with sulfate, whereby the sulfuric poisoning becomes worse to lower the activity and the SOx absorbing ability of the catalyst. Contrarily, according to the inventive device for cleaning exhaust gas, since ozone is fed thereto, it is possible to absorb SOx without the assistance of the active points 37, and, in fact, there are no active points 37 in this embodiment. Accordingly, even if sulfate is stored on the carriers 35, the activity and the SOx absorbing ability of the catalyst do not so worsen as in the conventional SOx trap catalyst. Thus, it is possible to maintain the sufficient SOx absorbing ability for a long period.

In this embodiment, since the SOx trap catalyst 30 has no active points 37, there are advantages described below. That is, if sulfate absorbed by the SOx trap catalyst is decomposed and released, sulfuric components thereof are absorbed by the downstream NOx catalyst 20 to result in the sulfuric poisoning of the NOx catalyst 20. In a case of the conventional SOx trap catalyst having active points 37, in the same manner as the regeneration of sulfuric poisoning in the NOx catalyst, by rising the atmospheric temperature of the catalyst to a high value (for example, 400°C or higher) at which sulfate is releasable from the catalyst as well as causing the atmosphere of the catalyst to the reducing (rich) atmosphere, sulfate is decomposed and released from the SOx trap catalyst. On the other hand, when the rich spike is executed for the purpose of releasing NOx from the NOx catalyst, the SOx trap catalyst is similarly exposed to the reducing atmosphere. At that time, if the exhaust gas temperature is as high as allowing sulfate to be releasable, for example, due to the high load drive, sulfate is decomposed and released from the SOx trap catalyst to poison the downstream NOx catalyst with sulfur.

The operation of the conventional SOx trap catalyst for releasing sulfate is caused by the active points consisting of precious metal. Namely, the reaction starts from the active points to decompose and release sulfate. Since there are no active points 37 in the SOx trap catalyst 30 according to this embodiment, however, it is difficult to release sulfate even if the atmosphere is hot and reductive as described above. Thereby, it is possible to prevent the downstream NOx catalyst 20 from being poisoned by sulfate released from the SOx trap catalyst 30 when the rich spike is executed.

According to this embodiment, the absorption of SOx in the SOx trap catalyst 30 is executed with the assistance of the ozone feeding. Therefore, it is desirable to always feed ozone even at a small amount during the operation of the engine.

In this connection, as the SOx trap catalyst 30 absorbs SOx, a total amount of the absorbed SOx reaches the maximum absorbable amount of the SOx trap catalyst 30 in due course, and the SOx absorbing ability is significantly lowered (that is, saturated). This state is referred to as the saturation of the SOx trap catalyst 30, and the SOx trap catalyst 30 may be exchanged to a fresh one. To inform this timing to the user, alarm means such as a lamp or a buzzer may be provided. Or, means for detecting the saturation of the SOx trap catalyst 30 may be provided. For example, ECU 100 integrates an amount of consumed fuel based on the detected value of a fuel meter, and the saturation of the SOx trap catalyst 30 may be determined thereby.

On the other hand, fuel having the significantly low sulfuric concentration has recently been developed and partially put into practice. In an automobile engine using such fuel, there may be a possibility in that the SOx trap catalyst does not saturate until the lifetime of the automobile has been reached, but continues to exhibit the sufficient SOx absorbing ability. Accordingly, in such a case, it is unnecessary to consider the exchange of the SOx trap catalyst.

Here, of course, the NOx catalyst 20 has a function for cleaning NOx in the exhaust gas at a cleaning rate higher than that of the SOx trap catalyst 30. While the SOx trap catalyst 30 having no precious metal forming the active points 37 is used in the above-mentioned embodiment, it is also possible to use the SOx trap catalyst 30 having precious metal. In either cases, an amount of precious metal carried on the downstream NOx catalyst 20 is preferably larger than that carried on the upstream SOx trap catalyst 30. In this case, it is possible that while the amount of precious metal carried on SOx trap catalyst 30 is made uniform from the upstream end to the downstream end thereof and that of the precious metal carried on the NOx catalyst 20 is made uniform from the upstream end to the downstream end thereof, a total amount of precious metal carried on the NOx catalyst 20 is made more than that on the. SOx trap catalyst 30. Or, an amount of precious metal may be gradually increased from the upstream end of the SOx trap catalyst 30 to the downstream end of the NOx catalyst 20.

Next, results of tests using model gas in relation to this embodiment will be described below.

### (1) Test equipment

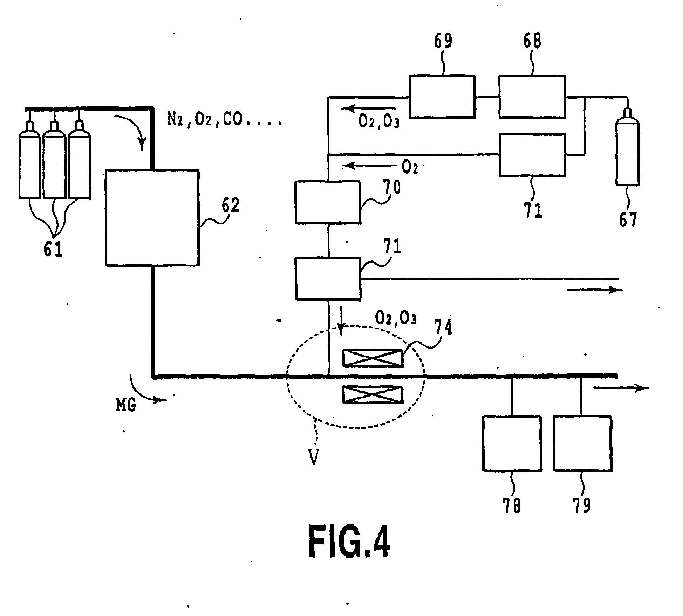

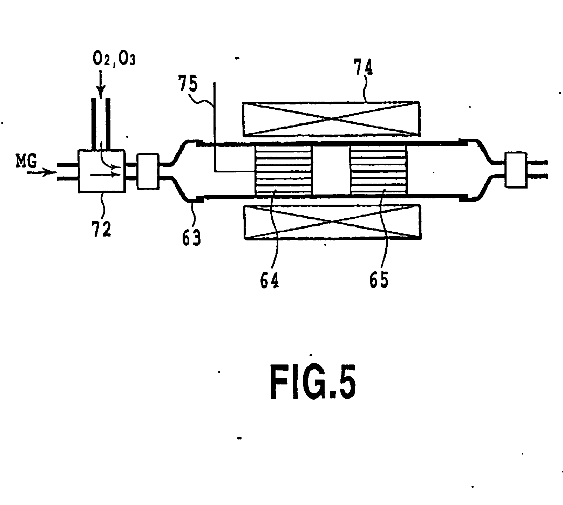

Fig. 4 illustrates a test equipment as a whole, and Fig. 5 illustrates an area V of Fig. 4 in detail. Reference numeral 61 denotes a plurality of gas bombs filled with raw material gas for producing model gas similar to the composition of exhaust gas discharged from a gasoline engine. The raw material gas referred to herein may be N₂, O₂, CO or others. Reference numeral 62 denotes a model gas generator having a mass flow controller, for mixing predetermined amounts of the respective raw material gases to produce the model gas MG. As shown in Fig. 5 in detail, the model gas MG passes through a three-way elbow 72, after which sequentially passes a SOx trap catalyst 64 and a NOx catalyst 65 of a storage reduction type, and finally is discharged from an exhaust duct not shown into an outer air.

As shown in Fig. 4, gaseous oxygen O₂ fed from an oxygen bomb 67 is bifurcated, one of which is controlled in a flow rate by a flow rate control unit 68 and fed to an ozone generator 69. In the ozone generator 69, oxygen is selectively and partially converted to ozone O₃, and these oxygen and ozone (or oxygen alone) reaches an ozone analyzer 70. The other of the bifurcated oxygen is controlled in a flow rate by another flow rate control unit 71, and thereafter mixed with gas fed from the ozone generator 69 and reaches the ozone analyzer 70. In the ozone analyzer 70, the concentration of ozone in the incoming gas, i.e., supplied gas, is measured, and thereafter a flow rate of the supplied gas is controlled by the flow rate control unit 71. Redundant gas is discharged outside from an exhaust duct not shown, and the supplied gas controlled in flow rate is mixed with the model gas MG in the three-way elbow 72 as shown in Fig. 5. This mixed gas sequentially passes through the SOx trap catalyst 64 and the storage reduction type NOx catalyst 65, and thereafter, is processed by an exhaust gas analyzer 78 for measuring the concentration of SOx, SO₂, H₂S and an ozone analyzer 79 for measuring the concentration of ozone, and finally discharged outside from an exhaust duct not shown.

An electric heater 74 for controlling the temperature of the SOx trap catalyst 64 is provided on the outer circumference of a quartz tube 63. Also, a temperature sensor 75 is provided for measuring the temperature of a catalyst floor of the SOx trap catalyst 64.

The NOx catalyst 65 includes a honeycomb-shaped cordielite substrate having a diameter of 30 mm, a length of 25 mm, a cell wall thickness of 4 mil (milli inch length; approximately 0.1 mm) and the number of cells of 400 cps (cells per square inch; approximately 62 cells per 1 square centimeter) coated with γ-Al₂O₃ as a carrier. A coated amount is 120 g/L (a denominator L means 1 liter of catalyst). Barium acetate is carried thereon with water and calcined at 500°C for two hours. An amount of barium acetate carried thereon is 0.2 mol/L. This catalyst is immersed into a solution containing ammonium bicarbonate and dried at 250°C. Further, Pt is carried by using aqueous solution containing dinitrodiamine platinum, and after being dried, calcined at 450°C for one hour. An amount of Pt carried thereon is 2 g/L.

### (2) Test conditions

Tests were executed under the following conditions on the respective SOx trap catalysts 64 in Examples 1 to 4 described later. First, the electric heater 74 is controlled so that the temperature detected by the temperature sensor 75 is maintained constant (200°C). When the temperature is stable, the model gas of the following composition is made to flow and simultaneously therewith supplied, gas is mixed with the model gas at the three-way elbow 72. When ozone is fed, the ozone generator 69 is made ON. Thereby, the supplied gas becomes the mixed gas of ozone and oxygen. Contrarily, if ozone is not fed, the ozone generator 69 is made OFF. Thereby, the supplied gas is oxygen alone. The composition of the model gas is SO₂ of 50 ppm, H₂O of 3% and N₂ of residue. The composition of the supplied gas containing ozone is ozone O₃ of 50000 ppm and O₂ of residue. The flow rate of the supplied gas is 1 L/min.

An amount of sulfur trapped by the SOx trap catalyst 64 and the NOx catalyst 65 for two hours after feeding the model gas was obtained by the inductively coupled plasma emission spectrochemical analysis (ICP analysis).

### (3) Examples (SOx trap catalyst)

### Example 1

The SOx trap catalyst was formed of a cordielite honeycombe substrate having a diameter of 30 mm, a length of 25 mm, a cell wall thickness of 4 mil (milli inch length; 1/1000 inch) and the number of cells of 400 cpsi (cells per square inch; approximately 62 per 1 square centimeter), coated with γ-Al₂O₃ as a carrier. An amount of coaing is 120 g/L. Barium acetate was carried thereon with water and calcined at 500°C for two hours. An amount of barium acetate is 0.2 mol/L. This catalyst was immersed into a solution containing ammonium bicarbonate and dried at 250°C. Further, Pt is carried by using an aqueous solution containing dinitrodiamine platinum, and after being dried, calcined at 450°C for one hour. An amount of carried Pt is 2 g/L.

### • Example 2

Example 2 is the same as Example 1 except that Pt is not carried.

### • Example 3

The SOx trap catalyst was formed of a cordielite honeycombe substrate having a diameter of 30 mm, a length of 25 mm, a cell wall thickness of 4 mil (milli inch length; 1/1000 inch) and the number of cells of 400 cpsi (cells per square inch; approximately 62 per 1 square centimeter), coated with γ-Al₂O₃ as a carrier. An amount of coaing is 120 g/L. Further, Pt is carried by using an aqueous solution containing dinitrodiamine platinum, and after being dried, calcined at 450°C for one hour. An amount of carried Pt is 2 g/L. Further, potassium acetate was carried thereon with water and calcined at 500°C for two hours. A carried amount of potassium acetate is 0.2 mo/L.

### • Example 4

Example 4 is the same as Example 3 except that Pt is not carried.

### (4) Test results

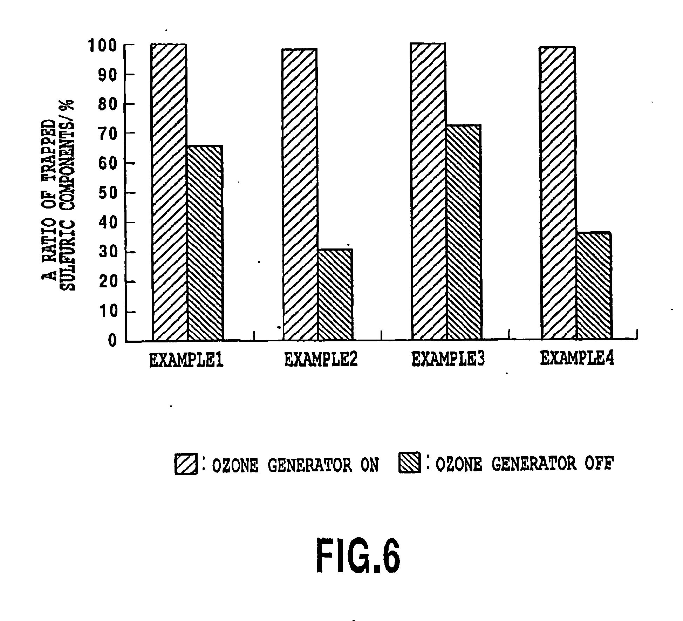

Fig. 6 illustrate the comparison of ratios of sulfuric components trapped by the SOx trap catalysts in Examples 1 to 4. As apparent from the drawing, when the ozone generator 69 was switched ON to feed ozone, it was possible to trap approximately 100% of the sulfuric components in either of Examples. From this result, it is possible to confirm the effect of the present invention for preventing SOx from flowing to the downstream side of the SOx trap catalyst as well as avoiding the sulfuric poisoning of the NOx catalyst.

On the other hand, when the ozone generator 69 is switched OFF not to feed ozone, a ratio of sulfuric components trapped by the SOx trap catalyst becomes less in comparison with a case wherein ozone is fed. The reason therefor is that SO₂ in the model gas is not so sufficiently oxidized as in a case of ozone. However, in Examples 1 and 3 having Pt, more amounts of sulfuric components could be trapped than in Examples 2 and 4 having no Pt. The reason therefor is that Pt forming the active points can oxidize or activate SO₂ in the model gas although not so effective as ozone. In this regard, since this test was carried out for a short period as two hours after being exchanged to a fresh one, it is expected that if the trapping of sulfuric components is conducted for a longer period, Pt in Examples 1 and 3 are gradually covered with sulfate to lower the SOx absorbing ability and finally a level of Examples 2 and 4 is reached.

While the present invention has been described above with reference to the embodiment, the present invention should not be limited to this embodiment. For example, although the NOx catalyst 20 and the SOx trap catalyst 30 are separately provided from each other in the above embodiment, these may be integrated together by using a common substrate or a casing.

The present invention includes all variations, modifications or equivalents contained in the present invention as defined by the attached claims.

### INDUSTRIAL APPLICABILITY

The present invention is applicable to a device for cleaning exhaust gas of an internal combustion engine provided with exhaust gas cleaning means such as catalysts.

## Claims

1. A device for cleaning exhaust gas of an internal combustion engine (10), comprising
means (20) provided in an exhaust gas passage of the internal combustion engine, for cleaning exhaust gas discharged from a combustion chamber (13),
a SOx trap catalyst (30) provided in said exhaust gas passage at a position upstream from said exhaust gas cleaning means (20), for absorbing SOx in the exhaust gas, and
means (40, 41, 42, 43) for feeding ozone to said exhaust gas passage at a position upstream from said SOx trap catalyst (30), wherein
said exhaust gas cleaning means (20) cleans at least one of HC, CO and NOx components in the exhaust gas at a cleaning rate higher than that of said SOx trap catalyst(30), **characterized in that** said exhaust gas cleaning device (20) comprises a NOx catalyst of a storage reduction type, and said NOx catalyst of a storage reduction type carries more precious metal than in said SOx trap catalyst (30).

2. A device for cleaning exhaust gas of an internal combustion engine as defined by claim 1, wherein said SOx trap catalyst (30) contains alkali metal element, alkaline earth metal element or rare earth element.

3. A device for cleaning exhaust gas of an internal combustion engine as defined by claim 1, wherein said SOx trap catalyst (30) has no active points consisting of precious metal.

## Patentansprüche

1. Vorrichtung zum Reinigen eines Abgases aus einem Verbrennungsmotor (10), umfassend:
eine Einrichtung (20), die in einer Abgasleitung des Verbrennungsmotors vorgesehen ist, zum Reinigen von Abgas, das aus einer Brennkammer (13) ausgelassen wird,
eine SOx-Katalysatorfalle (30), die an einer Stelle, die der Abgasreinigungseinrichtung (20) vorgelagert ist, in der Abgasleitung angeordnet ist, zum Absorbieren von SOx im Abgas, und
eine Einrichtung (40, 41, 42, 43) zum Einspeisen von Ozon in die Abgasleitung an einer Stelle, die der SOx-Katalysatorfalle (30) vorgelagert ist, wobei
die Abgasreinigungseinrichtung (20) das Abgas von mindestens einer der Komponenten HC, CO und NOx reinigt, und zwar mit einer Reinigungsrate, die höher ist als diejenige der SOx-Katalysatorfalle (30), **dadurch gekennzeichnet, dass** die Abgasreinigungsvorrichtung (20) einen NOx-Speicherungs/Reduktionskatalysator aufweist und der NOx-Speicherungs/Reduktionskatalysator mehr Edelmetall trägt als in der SOx-Katalysatorfalle vorhanden ist (30).

2. Vorrichtung nach Anspruch 1 zum Reinigen eines Abgases aus einem Verbrennungsmotor, wobei die SOx-Katalysatorfalle (30) ein Alkalimetallelement, ein Erdalkalimetallelement oder ein Seltenerdelement enthält.

3. Vorrichtung nach Anspruch 1 zum Reinigen von Abgas aus einem Verbrennungsmotor, wobei die SOx-Katalysatorfalle (30) keine aktiven Stellen aufweist, die aus Edelmetall bestehen.

## Revendications

1. Dispositif pour purifier le gaz d'échappement d'un moteur à combustion interne (10), comprenant :
des moyens (20) prévus dans un passage de gaz d'échappement du moteur à combustion interne, pouvant purifier le gaz d'échappement déchargé par une chambre de combustion (13),
un catalyseur de SOx (oxyde de soufre) (30) prévu dans ledit passage de gaz d'échappement dans une position située en amont desdits moyens de purification de gaz d'échappement (20), pour absorber le SOx dans le gaz d'échappement, et
des moyens (40, 41, 42, 43) pour amener de l'ozone audit passage de gaz d'échappement dans une position située en amont dudit catalyseur de SOx (30), dans lequel :
lesdits moyens de purification de gaz d'échappement (20) purifient au moins un composant parmi HC, CO et NOx dans le gaz d'échappement à une vitesse de purification supérieure à celle dudit catalyseur de SOx (30),
**caractérisé en ce que** ledit dispositif de purification de gaz d'échappement (20) comprend un catalyseur de NOx d'un type à réduction de stockage, et ledit catalyseur de NOx d'un type à réduction de stockage transporte plus de métal précieux que dans ledit catalyseur de SOx (30).

2. Dispositif pour purifier le gaz d'échappement d'un moteur à combustion interne selon la revendication 1, dans lequel ledit catalyseur de SOx (30) comprend un élément en métal alcalin, un élément en métal alcalino-terreux ou un élément de terre rare.

3. Dispositif pour purifier le gaz d'échappement d'un moteur à combustion interne selon la revendication 1, dans lequel ledit catalyseur de SOx (30) n'a pas de points actifs se composant de métal précieux.
